# EUROPEAN PATENT APPLICATION

(11) **EP 4 576 354 A1**
(43) Date of publication of application: **25.06.2025**
(21) Application number: 23891931.0
(22) Date of filing: 10.11.2023
(51) Int. Cl.: H01M 50/184, H01M 50/533, H01M 50/593, H01M 50/586, H01M 50/591, H01M 50/553, H01M 50/204, H01M 50/249

(54) **BATTERY CELL AND BATTERY PACK COMPRISING SAME, AND VEHICLE COMPRISING BATTERY PACK**

(30) Priority: 16.11.2022 KR 20220153441
(71) Applicant: LG Energy Solution, Ltd., Seoul 07335 (KR)
(72) Inventor: YOON, Kyoung-Soon, Daejeon 34122 (KR)
(74) Representative: Plasseraud IP
(86) International application number: PCT/KR2023/018107
(87) International publication number: WO 2024/106864

(57) **Abstract**

Disclosed is a battery cell, which includes an electrode assembly having a cell body and an electrode tab extending from the cell body; a cell case having an accommodation portion configured to accommodate the electrode assembly and a circumferential portion extending outward from the accommodation portion; an electrode lead electrically coupled to the electrode tab; and a conductive frame disposed on one surface of the circumferential portion and electrically coupled to the electrode lead through one surface of the circumferential portion.

## Description

### TECHNICAL FIELD

The present disclosure relates to a battery cell, a battery pack including the battery cell, and a vehicle including the battery pack.

The present application claims priority to Korean Patent Application No. 10-2022-0153441 filed on November 16, 2022 in the Republic of Korea, the disclosures of which are incorporated herein by reference.

### BACKGROUND ART

A pouch-type secondary battery cell typically has a structure in which electrode leads (a positive electrode lead and a negative electrode lead) are drawn out of the pouch case. The electrode lead may function as a terminal of a pouch-type secondary battery cell. In order for the electrode lead to function as a terminal, the electrode lead needs to be exposed to the outside of the pouch case. If the electrode lead is exposed to the outside like this, it may be inevitable to apply a structure in which a component passes through the circumferential portion of the pouch case to electrically connect the electrode lead to the electrode assembly accommodated inside the pouch case.

A typical pouch-type secondary battery cell with this structure may have a structure in which a lead film is applied to prevent the sealing force from being deteriorated in the electrode lead drawing region as the electrode lead is drawn out through the circumferential portion of the pouch case.

As above, multiple layers may be formed in the region where the electrode lead is drawn out, and as a result, the sealing force in that region may be reduced compared to the remaining sealing region. Therefore, when gas is generated inside a pouch-type secondary battery cell and the internal pressure increases, the region where the electrode lead is drawn out may become a weak point, which may cause a venting defect due to which venting occurs in the corresponding region at an unwanted time.

Therefore, for the pouch-type secondary battery cell, there is a need to develop a structure that may eliminate or minimize the possibility of weakening the sealing force of the pouch case due to the application of a component that functions as a terminal.

### DISCLOSURE

### Technical Problem

The present disclosure is designed to solve the problems of the related art, and therefore the present disclosure is directed to eliminating or minimizing the possibility of weakening the sealing force of a cell case due to the application of a component that functions as a terminal of a battery cell.

In another aspect, when applying a component that functions as a terminal of a battery cell, the present disclosure is directed to preventing the sealing force from being deteriorated at a joint portion by blocking the component not to be drawn out through the joint portion of the pouch case.

In still another aspect, the present disclosure is directed to strengthening the bonding force of the sealing region of the pouch case, which is formed in a direction where the terminal of the battery cell is located.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery cell, comprising: an electrode assembly having a cell body and an electrode tab extending from the cell body; a cell case having an accommodation portion configured to accommodate the electrode assembly and a circumferential portion extending outward from the accommodation portion; an electrode lead electrically coupled to the electrode tab; and a conductive frame disposed on one surface of the circumferential portion and electrically coupled to the electrode lead through one surface of the circumferential portion.

The electrode lead may be located inside the cell case.

The battery cell may further comprise an insulating frame configured to partially cover the conductive frame.

The battery cell may further comprise a first fastening member configured to pass through the conductive frame, the circumferential portion and the electrode lead; and a second fastening member provided at a side opposite to the first fastening member with the circumferential portion being interposed therebetween, the second fastening member being coupled to the first fastening member.

The conductive frame may be configured to pressurize the circumferential portion as the first fastening member and the second fastening member are fastened.

The battery cell may further comprise an insulating frame configured to partially cover the conductive frame, and the conductive frame and the insulating frame may be configured such that the conductive frame pressurizes the insulating frame as the first fastening member and the second fastening member are fastened.

The conductive frame may include a lead connection portion electrically coupled to the electrode lead; and a terminal portion extending from the lead connection portion and disposed on the circumferential portion.

The insulating frame may include a first portion configured to surround the lead connection portion; and a second portion configured to cover a part of the terminal portion.

The lead connection portion may be provided as a pair, and the pair of lead connection portions may be connected by the terminal portion.

The first portion may be provided as a pair, and the pair of first portions may be connected by the second portion.

The battery cell may further comprise a sealing member interposed between an inner surface of the cell case and the electrode lead and configured to surround a circumference of a coupling region between the conductive frame and the electrode lead.

The battery cell may further comprise a tab cover member located inside the cell case and configured to cover a coupling region of the electrode lead and the electrode tab.

The tab cover member may be configured so that one side is supported by the electrode lead fixed on the circumferential portion and the other side is supported by the cell body.

In another aspect of the present disclosure, there is also provided a battery pack, comprising: a cell stack including a plurality of battery cells according to an embodiment of the present disclosure; and a pack housing configured to accommodating the cell stack.

In another aspect of the present disclosure, there is also provided a vehicle, comprising the battery pack according to an embodiment of the present disclosure.

### Advantageous Effects

According to one aspect of the present disclosure, the possibility of weakening the sealing force of the cell case due to the application of a component that functions as a terminal of the battery cell may be eliminated or minimized.

According to another aspect of the present disclosure, when applying a component that functions as a terminal of a battery cell, it is possible to prevent the sealing force from being deteriorated at the joint portion by blocking the component not to be drawn out through the joint portion of the pouch case.

According to still another aspect of the present disclosure, in the sealing region of the pouch case, the bonding force of the sealing region formed in a direction where the terminal of the battery cell is located may be strengthened.

However, the beneficial effects that can be derived through the present disclosure are not limited to the effects described above, and other advantageous effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a part of the appearance of a battery cell according to an embodiment of the present disclosure.
FIG. 2 is an exploded perspective view showing the battery cell of FIG. 1.
FIG. 3 is a plan view showing the internal structure of the battery cell according to an embodiment of the present disclosure.
FIG. 4 is a cross-sectional view, taken along line A-A' of FIG. 1.
FIG. 5 is a diagram showing another embodiment of the battery cell shown in FIG. 4.
FIG. 6 is a diagram showing the battery cell according to an embodiment of the present disclosure, in which an insulating frame disposed at a first side of a circumferential portion is removed.
FIG. 7 is an exploded view showing the insulating frame disposed at the first side of the circumferential portion in the battery cell according to an embodiment of the present disclosure.
FIG. 8 is a plan view showing a part of the appearance of the battery cell according to an embodiment of the present disclosure.
FIG. 9 is a diagram showing another embodiment of the battery cell shown in FIG. 7.
FIG. 10 is a diagram showing another embodiment of the battery cell shown in FIG. 8.
FIG. 11 is a diagram to explain the region where sealing is applied in the battery cell according to an embodiment of the present disclosure.
FIG. 12 is a cross-sectional view, taken along line B-B' of FIG. 1.
FIGS. 13 and 14 are diagrams to explain the coupled structure of an electrode lead and a tab cover member of the present disclosure.
FIG. 15 is a diagram showing a battery pack according to an embodiment of the present disclosure.
FIG. 16 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

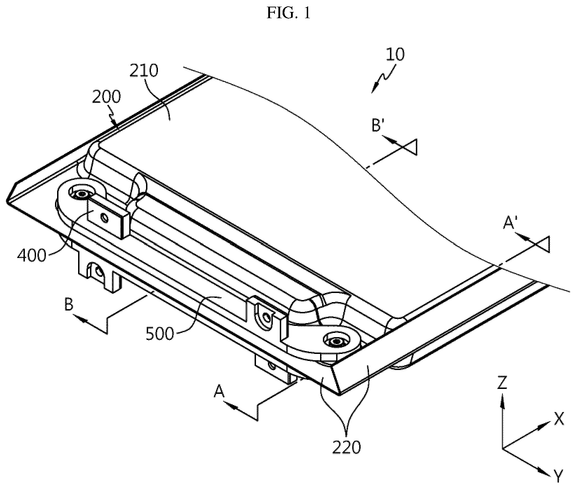

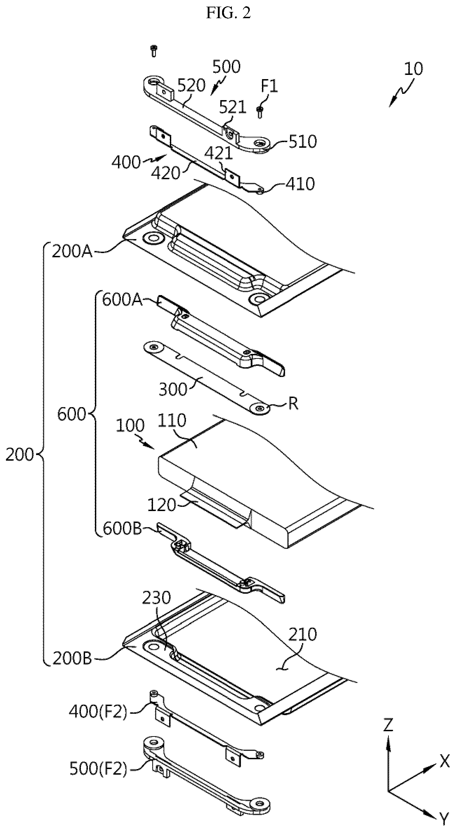

FIG. 1 is a perspective view showing a part of the appearance of a battery cell according to an embodiment of the present disclosure, and FIG. 2 is an exploded perspective view showing the battery cell of FIG. 1.

Referring to FIGS. 1 and 2, the battery cell 10 according to an embodiment of the present disclosure may include an electrode assembly 100, a cell case 200, an electrode lead 300, and a conductive frame 400.

The electrode assembly 100 may include a cell body 110 and an electrode tab 120 extending from the cell body 110. The cell case 200 may include an accommodation portion 210 configured to accommodate the electrode assembly 100 and a circumferential portion 220 extending outward from the accommodation portion 210. The electrode lead 300 may be electrically coupled to the electrode tab 120 of the electrode assembly 100. The conductive frame 400 is disposed on one surface of the circumferential portion 220 of the cell case 200, and may be electrically coupled to the electrode lead 300 through one surface of the circumferential portion 220.

According to the above-described configuration of the battery cell 10 of the present disclosure, the conductive frame 400 located on the circumferential portion 220 of the cell case 200 may be used as an external terminal for electrical connection.

In the present disclosure, if the conductive frame 400 is not provided on the circumferential portion 220 of the cell case 200, the electrode lead or other electrical connection components electrically connected to the electrode assembly 100 must be exposed to the outside of the cell case 200. Therefore, in order to prevent the sealing force of the cell case from deteriorating, the thickness and/or width of the electrode lead 300 or other electrical connection components may be greatly limited. If the thickness and/or width of electrical connection components are limited in this way, it may be difficult to manage the resistance of the battery cell 10 below a certain level.

From this perspective, according to the above-described configuration of the present disclosure, by securing a sufficient thickness of the conductive frame 400 that may function as an external terminal of the battery cell 10, it is possible to reduce the resistance of the battery cell 10 without deteriorating the sealing force of the cell case 200.

Meanwhile, the electrode assembly 100 may include a first electrode, a second electrode, and a separator interposed therebetween. The electrode assembly 100 may be a stack-type electrode assembly in which the first electrode, the separator, and the second electrode are stacked at least once, or a jelly-roll type electrode assembly in which the stack is wound. The first electrode may be a positive electrode or a negative electrode, and the second electrode may be an electrode with an opposite polarity to the first electrode. The first electrode and the second electrode may include a coated portion, which is a region coated with electrode active material, and an uncoated portion, which is a region not coated with electrode active material. The electrode tab 120 of the present disclosure may be an uncoated portion or a separate lead tab coupled to the uncoated portion. When the electrode assembly 100 includes a plurality of first electrodes and second electrodes, the electrode tab 120 may be an uncoated portion combination in which a plurality of uncoated portions are combined or a separate lead tab coupled to the uncoated portion combination. The electrode tab 120 may be provided at one side and the other side of the electrode assembly 100, respectively. In this case, the electrode tab provided at one side of the electrode assembly 100 may have a first polarity, and the electrode tab provided at the other side may have a second polarity. The cell body 110 may refer to the remaining portion of the electrode assembly 100 excluding the electrode tab 120.

The cell case 200 may be, for example, a pouch case including a multi-layer pouch film. That is, the battery cell 10 may be a pouch-type battery cell. The pouch film may include a metal layer and a pair of resin layers configured to cover both surfaces of the metal layer. The cell case 200 may include a first case 200A and a second case 200B. The first case 200A and the second case 200B may be configured to cover both surfaces of the electrode assembly 100, respectively. At least one of the first case 200A and the second case 200B may have a groove for forming the accommodation portion 210. The first case 200A and the second case 200B may be contacted and joined to each other to form the circumferential portion 220 of the cell case 200. The circumferential portion 220 may be formed by sealing the region where the first case 200A and the second case 200B contacts, for example, by heat fusion.

The electrode lead 300 may be a plate containing a conductive metal. The electrode lead 300 may be coupled directly or indirectly with the electrode tab 120. In the drawings of this application, only electrode lead 300 electrically coupled to the electrode tab 120 provided at one side of the electrode assembly 100 is shown, but the present disclosure is not limited thereto, and the electrode lead 300 may also be coupled to the electrode tab 120 provided at the other side of the electrode assembly 100.

The conductive frame 400 may include conductive metal. The conductive frame 400 may be electrically coupled to the electrode lead 300 located inside the cell case 200 through a hole formed in one surface of the circumferential portion 220 of the cell case 200. The conductive frame 400 may have a shape that elongates along the width direction (direction parallel to the Y-axis) of the battery cell 10. The conductive frame 400 may be electrically coupled to the electrode lead 300 at a plurality of points through the circumferential portion 220. For example, both ends of the conductive frame 400 in the extension direction may be electrically coupled to the electrode lead 300.

If there are a plurality of coupling portions between the conductive frame 400 and the electrode lead 300 as above, the coupling strength may be improved, and the electrical resistance of the battery cell 10 may also be reduced. Also, if there are a plurality of coupling portions, the force with which the conductive frame 400 presses the circumferential portion 220 may increase, and thus the sealing force on the circumferential portion 220 may increase. By increasing the sealing force at both sides in the longitudinal direction (direction parallel to the X-axis) of the battery cell 10, when the internal pressure of the battery cell 10 increases, venting may be induced at both sides in the width direction (direction parallel to the Y-axis) of the battery cell 10.

Meanwhile, the conductive frame 400 may be provided not only at one surface of the circumferential portion 220 of the cell case 200 but also at the opposite surface. In this case, when components that may function as external terminals are respectively provided at both sides of the circumferential portion 220 formed at one side in the longitudinal direction (direction parallel to the X-axis) of the battery cell 10 to stack a plurality of battery cells 10, adjacent battery cells 10 may be electrically connected easily.

In addition, the conductive frame 400 may be provided not only on the circumferential portion 220 formed at one side in the longitudinal direction (direction parallel to the X-axis) of the battery cell 10, but also on the circumferential portion 220 formed at the other side. In this case, the conductive frame 400 provided at one side in the longitudinal direction (direction parallel to the X-axis) of the battery cell 10 and the conductive frame 400 provided at the other side may have opposite polarities.

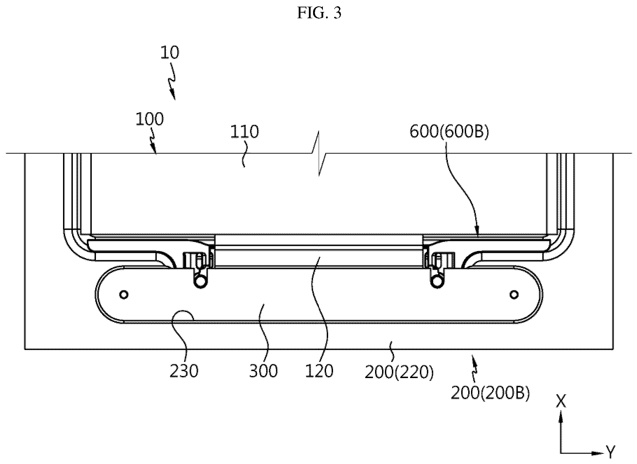

Next, the arrangement position of the electrode lead 300 of the present disclosure will be described in more detail with reference to FIG. 3. FIG. 3 is a plan view showing the internal structure of the battery cell according to an embodiment of the present disclosure.

Referring to FIG. 3, the electrode lead 300 may be located inside the cell case 200.

According to this arrangement position of the electrode lead 300, the concern about a decrease in the sealing force of the cell case 200 due to the electrode lead 300 being drawn out of the cell case 200 may be eliminated or significantly reduced. That is, when at least a part of the electrode lead 300 is drawn to the outside of the cell case 200, the sealing force at the region where the electrode lead 300 is drawn out may be deteriorated. In particular, when the cross-sectional area of the electrode lead 300 is expanded to reduce the electrical resistance in the current path, the sealing force at the region where the electrode lead 300 is drawn out may be further reduced due to an increase in thickness and/or width. Meanwhile, when the electrode lead 300 is not drawn to the outside of the cell case 200 as in the present disclosure, there is no concern about the deterioration of the sealing force as described above, so it may be easy to reduce the electrical resistance of the battery cell 10 by increasing the thickness and/or width of the electrode lead 300 to increase the cross-sectional area.

Meanwhile, the cell case 200 may include a lead accommodation portion 230 configured to have a shape that roughly corresponds to the electrode lead 300. The lead accommodation portion 230 may be, for example, a groove formed in the first case 200A or the second case 200B. In this case, the groove may be formed to have a depth approximately equal to the thickness of the electrode lead 300. Alternatively, a groove may be formed in the first case 200A, and a groove may be formed in the second case 200B at a position corresponding to the groove formed in the first case 200A. In this case, the sum of the depth of the groove formed in the first case 200A and the depth of the groove formed in the second case 200B may be approximately equal to the thickness of the electrode lead 300. The groove may be formed through molding of the first case 200A and/or the second case 200B.

If the lead accommodation portion 230 for accommodating the electrode lead 300 is formed in advance as above before the first case 200A and the second case 200B are coupled, it is possible to prevent stress from occurring due to the thickness of the electrode lead 300 in the circumferential portion 220 when the first case 200A and the second case 200B are coupled, thereby preventing the sealing force from deteriorating.

Meanwhile, the electrode lead 300 may have a shape elongating along the width direction (direction parallel to the Y-axis) of the battery cell 10. According to this structure, a sufficient coupling region may be secured between the electrode tab 120 and the electrode lead 300. Accordingly, the bonding strength between the electrode tab 120 and the electrode lead 300 may be improved, and the contact resistance at the coupling portion between the electrode tab 120 and the electrode lead 300 may be reduced.

Next, with reference to FIGS. 1 and 2, an insulating frame 500 of the present disclosure will be described.

Referring to FIGS. 1 and 2, the battery cell 10 of the present disclosure may further include an insulating frame 500. The insulating frame 500 may be configured to partially cover the conductive frame 400.

According to this configuration, the risk of unnecessary electrical contact due to overall exposure of the conductive frame 400 may be reduced, and a part of the conductive frame 400 may be exposed from the insulating frame 500 to function as an external terminal of the battery cell 10.

The insulating frame 500 may be made of an electrically insulating material. The insulating frame 500 may have a shape that roughly corresponds to the conductive frame 400.

Meanwhile, the insulating frame 500 may be provided not only on one surface of the circumferential portion 220 of the cell case 200 but also on the opposite surface. That is, when the conductive frame 400 is provided on both surfaces of the circumferential portion 220, the insulating frame 500 may also be provided on both surfaces of the circumferential portion 220 to partially cover each conductive frame 400.

In addition, the insulating frame 500 may be provided not only on the circumferential portion 220 formed at one side in the longitudinal direction (direction parallel to the X-axis) of the battery cell 10, but also on the circumferential portion 220 formed at the other side. That is, when the conductive frame 400 is provided not only on the circumferential portion 220 formed at one side in the longitudinal direction of the battery cell 10 but also on the circumferential portion 220 formed at the other side, the insulating frame 500 may be provided in a corresponding number at a position corresponding to each conductive frame 400.

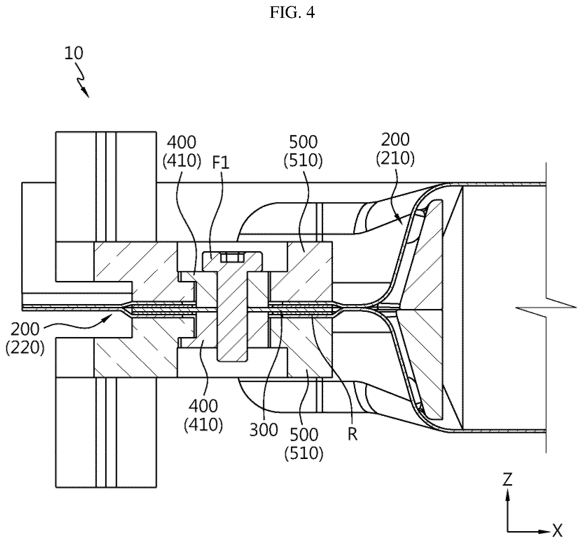

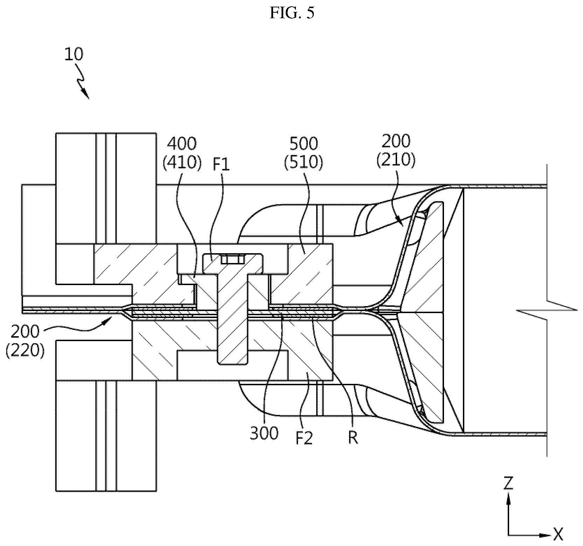

Next, the fastening structure of the insulating frame 400 will be described with reference to FIGS. 4 and 5 along with FIGS. 1 and 2.

FIG. 4 is a cross-sectional view, taken along line A-A' of FIG. 1, and FIG. 5 is a diagram showing another embodiment of the battery cell shown in FIG. 4.

Referring to FIGS. 1 and 2 and FIGS. 4 and 5, the battery cell 10 of the present disclosure may further include a first fastening member F1 (FIG. 5) and a second fastening member F2 (FIG. 5).

The first fastening member F1 may pass through the conductive frame 400, the circumferential portion 220, and the electrode lead 300. The second fastening member F2 is provided at the opposite side of the first fastening member F1 with the circumferential portion 220 interposed therebetween and may be coupled with the first fastening member F1.

According to this configuration, work such as welding may be omitted for the electrical connection between the conductive frame 400 and the electrode lead 300. In order to weld the contact area between the conductive frame 400 and the electrode lead 300, a sufficient space for welding work must be secured, but it is difficult to secure such space on the circumferential portion 220 of the cell case 200. Therefore, this configuration of the present disclosure may be a good way for electrical connection between components.

Meanwhile, the conductive frame 400 may be configured to pressurize the circumferential portion 220 according to fastening between the first fastening member F1 and the second fastening member F2.

According to this configuration, the conductive frame 400 may pressurize the circumferential portion 220 in the vertical direction (direction parallel to the Z-axis) through fastening between the first fastening member F1 and the second fastening member F2.

The first fastening member F1 may be, for example, a bolt having a thread on the outer circumferential surface. The second fastening member F2 may be configured so that the first fastening member F1 may be inserted and fixed therein. The second fastening member F2 may be, for example, a nut having a thread on the inner circumferential surface. However, the first fastening member F1 and the second fastening member F2 are not limited to these examples, and a fastening member having a structure that may be fastened in a direction to pressurize the circumferential portion 220 on both surfaces of the circumferential portion 220 may be applied as the fastening member of the present disclosure. If the conductive frame 400 is fixed on the circumferential portion 220 and electrically coupled to the electrode lead 300 by applying a pair of fastening members as above, the force pressing the circumferential portion 220 may be easily adjusted by changing the fastening force.

Referring to FIGS. 2 and 4 of this application together, the second fastening member F2 may be the conductive frame 400 of the present disclosure. That is, in the case where the conductive frame 400 is provided on the first surface of the circumferential portion 220 and the second side that is a surface opposite to the first surface, the first fastening member F1 may pass through the conductive frame 400 and the electrode lead 300 on the first surface and be fixed to the conductive frame 400 on the second surface. In this case, the conductive frame 400 on the second surface may function as the second fastening member F2 even without applying a separate fastening member such as a nut.

Meanwhile, as described above, the battery cell 10 of the present disclosure may include an insulating frame 500 configured to partially cover the conductive frame. In this case, the conductive frame 400 and the insulating frame 500 of the present disclosure may be configured so that the conductive frame 400 pressurizes the insulating frame 500 as the first fastening member F1 and the second fastening member F2 are fastened.

According to this configuration of the present disclosure, the pressing force applied to the circumferential portion 220 of the cell case 200 may be greater as the first fastening member F1 and the second fastening member F2 are fastened. In particular, in the region where the conductive frame 400 and the electrode lead 300 are coupled, a hole may be formed for inserting the conductive frame 400 into the cell case 200. Here, in the region adjacent to this hole, the need for pressurization of the circumferential portion 220 may be greater.

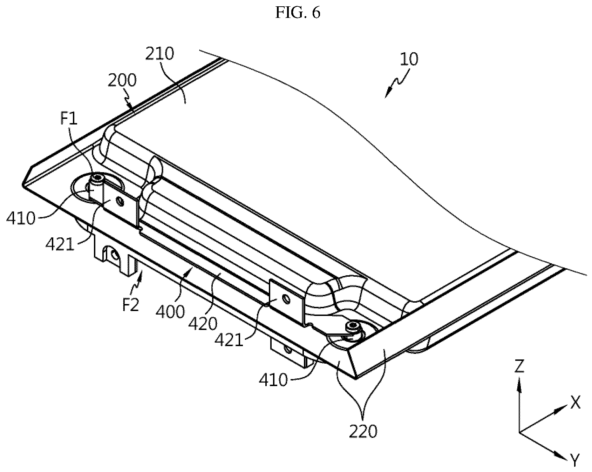

Next, exemplary forms of the conductive frame 400 and the insulating frame 500 of the present disclosure will be described with reference to FIGS. 6 to 10.

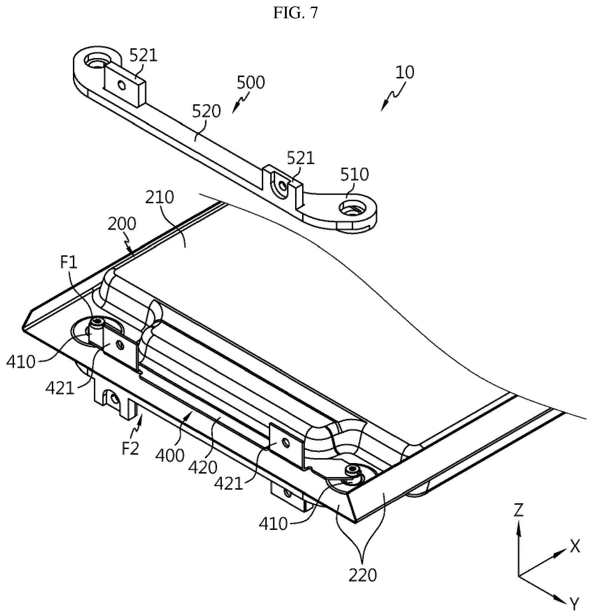

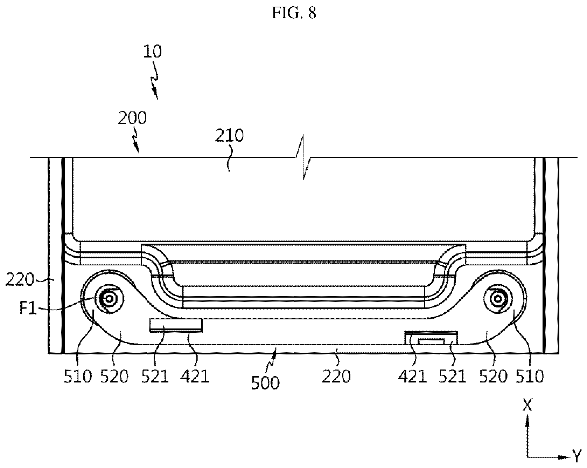

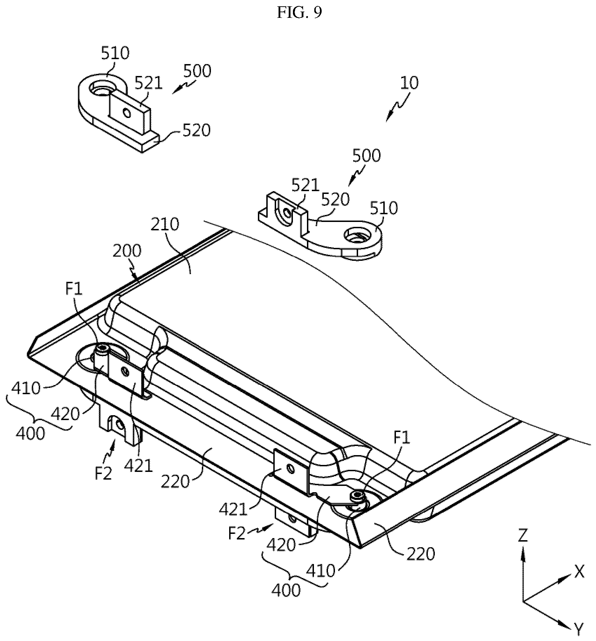

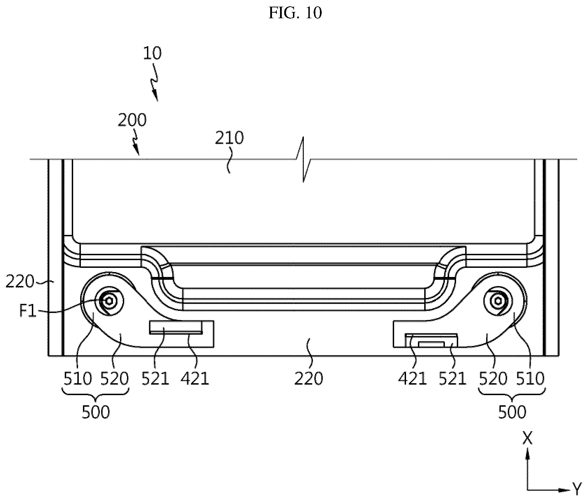

FIG. 6 is a diagram showing the battery cell according to an embodiment of the present disclosure, in which an insulating frame disposed at a first side of a circumferential portion is removed, FIG. 7 is an exploded view showing the insulating frame disposed at the first side of the circumferential portion in the battery cell according to an embodiment of the present disclosure, FIG. 8 is a plan view showing a part of the appearance of the battery cell according to an embodiment of the present disclosure, FIG. 9 is a diagram showing another embodiment of the battery cell shown in FIG. 7, and FIG. 10 is a diagram showing another embodiment of the battery cell shown in FIG. 8.

First, referring to FIGS. 6 to 8, the conductive frame 400 may include a lead connection portion 410 electrically coupled to the electrode lead 300 and a terminal portion 420 extending from the lead connection portion 410 and disposed on the circumferential portion 220. The insulating frame 500 may include a first portion 510 configured to surround the lead connection portion 410 and a second portion configured to cover a part of the terminal portion 420.

According to this configuration of the present disclosure, except for some areas that need to function as external terminals in the conductive frame 400, the remaining areas may be prevented from being exposed to the outside, so it is possible to effectively prevent unnecessary electrical contact from occurring.

The lead connection portion 410 of the conductive frame 400 may be provided as a pair. The pair of lead connection portions 410 may be connected by the terminal portion 420. Likewise, the first portion 510 of the insulating frame 500 may be provided as a pair. The pair of first portions 510 may be connected by the second portion 520. According to this configuration, the coupling force may be strengthened due to the increase in bonding points, and this may also result in a decrease in electrical resistance. In addition, the entire area of the pair of lead connection portions 410 and the partial area of the terminal portion 420 except for the area required for electrical connection with an external device may be covered with insulating components, so it is possible to prevent unnecessary electrical contact from occurring.

The terminal portion 420 may include a terminal extension portion 421 extending along a direction away from one surface of the circumferential portion 220 (direction parallel to the Z-axis). In this case, when electrically connecting neighboring battery cells 10, the terminal extension portions 421 respectively provided at the neighboring battery cells 10 may be directed toward each other, thereby facilitating electrical connection between the battery cells 10.

If the terminal portion 420 of the conductive frame 400 includes the terminal extension portion 421 as above, the second portion 520 of the insulating frame 500 may include an extension portion cover 521 configured to cover one surface of the terminal extension portion 421. According to this configuration, unnecessary electrical contact may be prevented by electrically insulating one of both surfaces of the terminal extension portion 421 except for the surface required for electrical connection.

Next, referring to FIGS. 9 and 10 along with FIG. 6, a pair of conductive frames 400 may be provided on one surface of the circumferential portion 220 formed at one side in the longitudinal direction (direction parallel to the X-axis) of the battery cell 10. The pair of conductive frames 400 may be disposed to be spaced apart from each other. Each of the pair of conductive frames 400 may include a lead connection portion 410 electrically coupled to the electrode lead 300 and a terminal portion 420 extending from the lead connection portion 410 and disposed on one surface of the circumferential portion 220. The terminal portion 420 may include a terminal extension portion 421.

Likewise, a pair of insulating frames 500 may be provided on one surface of the circumferential portion 220 formed at one side in the longitudinal direction (direction parallel to the X-axis) of the battery cell 10. Each of the pair of insulating frames 500 may be configured to partially cover the pair of conductive frames 400. The pair of insulating frames 500 may be disposed to be spaced apart from each other. Each of the pair of insulating frames 500 may include a first portion 510 configured to surround the lead connection portion 410 and a second portion 520 configured to cover a part of the terminal portion 420. The second portion 520 may include an extension portion cover 521 configured to cover one surface of the terminal extension portion 421.

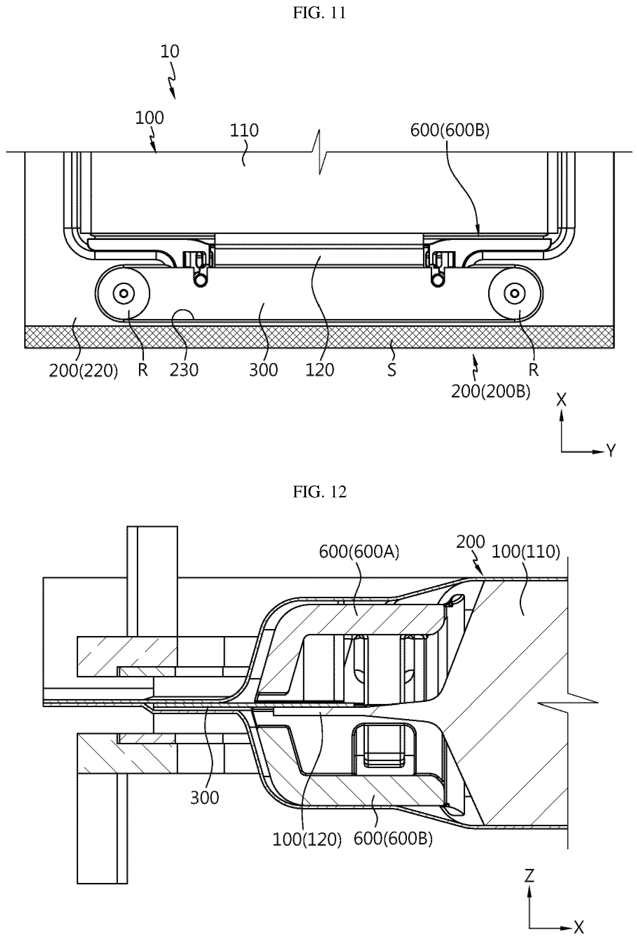

Next, the sealing member R of the present disclosure will be described with reference to FIG. 11 along with FIGS. 4 and 5. FIG. 11 is a diagram to explain the region where sealing is applied in the battery cell according to an embodiment of the present disclosure.

Referring to FIG. 11, the battery cell 10 of the present disclosure may further include a sealing member R interposed between the inner surface of the cell case 200 and the electrode lead 300. The sealing member R may be configured to surround the circumference of the coupling region between the conductive frame 400 and the electrode lead 300.

If the sealing member R is applied to the coupling region between the conductive frame 400 and the electrode lead 300 as above, it is possible to prevent electrolyte from leaking through the hole formed in the cell case 200 by the conductive frame 400. To maximize the sealing effect, the sealing member R may be provided on both surfaces of the electrode lead 300.

Meanwhile, as shown in FIG. 11, a sealing region S may be formed outside the region where the electrode lead 300 is accommodated in the circumferential portion 220. However, the present disclosure is not limited thereto. For example, the sealing region S may be the entire area where the first case 200A (see FIG. 2) and the second case 200B are in contact. If the area occupied by the sealing region S is increased in the circumferential portion 220 as above, the sealing performance of the cell case 200 may be improved. Meanwhile, referring to FIG. 11 along with FIG. 2, in the circumferential portion 220, the area of regions formed at both sides in the longitudinal direction (parallel to the X-axis direction) of the battery cell 10 may be larger than the area of regions formed at both sides in the width direction (direction parallel to the Y-axis) of the battery cell 10. Therefore, as described above, venting may be induced to both sides in the width direction (direction parallel to the Y-axis) of the battery cell 10 by increasing the area of the sealing region S along with pressurizing the circumferential portion 220.

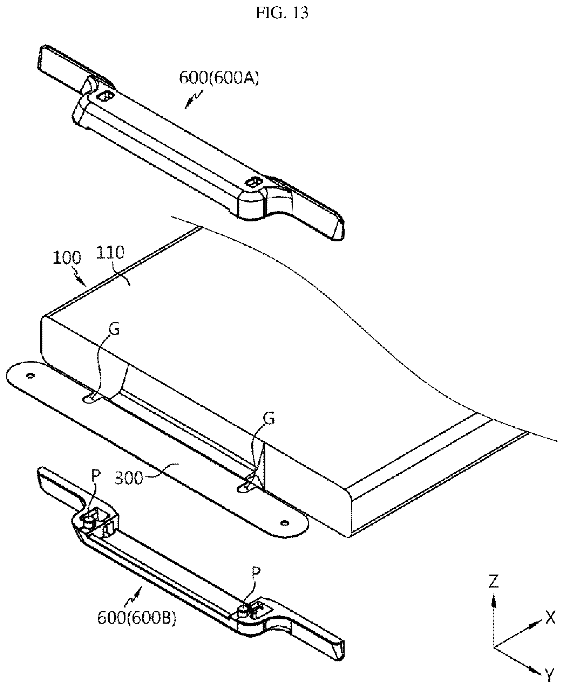

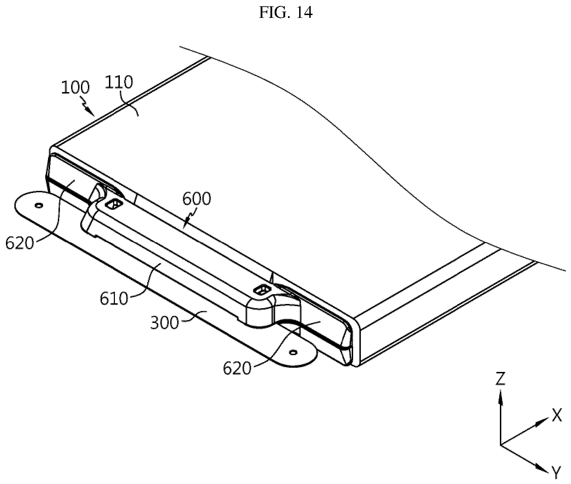

Next, with reference to FIGS. 12 to 14, a tab cover member 600 of the present disclosure will be described. FIG. 12 is a cross-sectional view, taken along line B-B' of FIG. 1, and FIGS. 13 and 14 are diagrams to explain the coupled structure of an electrode lead and a tab cover member of the present disclosure.

Referring to FIGS. 12 to 14, the battery cell 10 may include a tab cover member 600. The tab cover member 600 is located inside the cell case 200 and may be configured to cover the coupling region of the electrode lead 300 and the electrode tab 120. When the tab cover member 600 is provided, it is possible to prevent the coupling region between the electrode tab 120 and the electrode lead 300 from being damaged.

The tab cover member 600 may be configured such that one side is supported by the electrode lead 300 fixed on the circumferential portion 220 and the other side is supported by the cell body 110. In this case, the tab cover member 600 may prevent the electrode assembly 100 from moving inside the cell case 200, thereby preventing an impact from being applied to the coupling region between the electrode tab 120 and the electrode lead 300. Therefore, even if an impact is applied to the battery cell 10, it is possible to prevent defects from occurring due to damage to the coupling region between the electrode tab 120 and the electrode lead 300.

The tab cover member 600 may include a fixing protrusion P, and in this case, the electrode lead 300 may have a protrusion accommodation portion G configured to accommodate the fixing protrusion P. The protrusion accommodation portion G may be, for example, a groove indented from an edge of the tab cover member 600 adjacent to the electrode assembly 100 among edges of the tab cover member 600. For stable fixation of the tab cover member 600, the fixing protrusion P and the protrusion accommodation portion G may be provided in plurality.

The tab cover member 600 may be formed by coupling a pair of cover members 600A and 600B. The tab cover member 600 may include a body portion 610 and a wing portion 620. The body portion 610 may have a space to accommodate the coupling region of the electrode tab 120 and the electrode lead 300. The fixing protrusion P may be provided in the body portion 610. The wing portion 620 may be configured to extend from the body portion 610 and face the cell body 110. For example, the wing portion 620 may be provided at both sides of the body portion 610, respectively. Inside the cell case 200, the movement of the body portion 610 in a direction away from the cell body 110 may be restricted by the electrode lead 300, and the wing portion 620 may be in close contact with the cell body 110 to restrict movement in a direction toward the cell body 110.

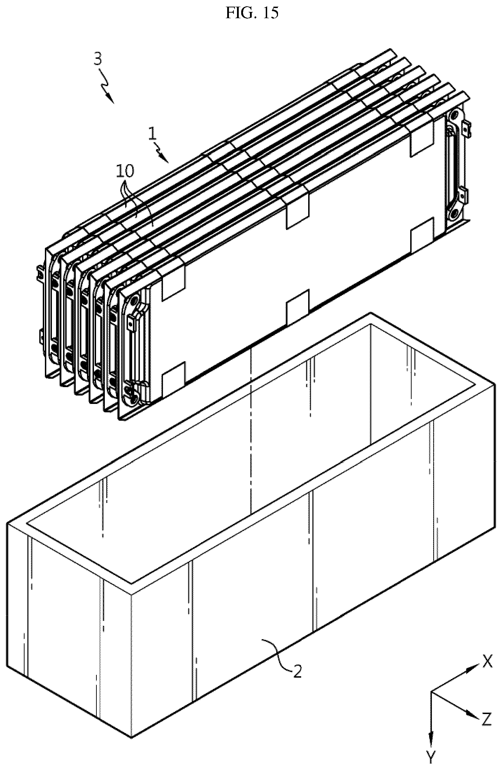

FIG. 15 is a diagram showing a battery pack according to an embodiment of the present disclosure. Referring to FIG. 15, the battery pack 3 according to an embodiment of the present disclosure may include a cell stack 1 including a plurality of battery cells 10 of the present disclosure as described above and a pack housing 2 accommodating the cell stack 1.

The cell stack 1 may have a structure in which a plurality of battery cells 10 are electrically connected using the conductive frame 400 (see FIGS. 1 and 2) exposed on the circumferential portion 220. Accordingly, the battery pack 3 of the present disclosure may be manufactured without going through the battery module stage. In other words, the battery pack 3 of the present disclosure may be manufactured through a cell-to-pack process.

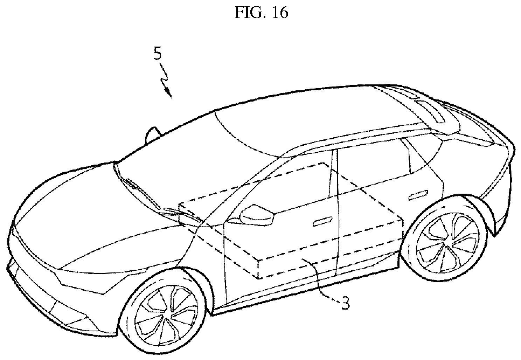

FIG. 16 is a drawing showing a vehicle according to an embodiment of the present disclosure. Referring to FIG. 16, the vehicle 5 according to an embodiment of the present disclosure may include the battery pack 3 according to an embodiment of the present disclosure as described above. The vehicle 5 may operate by receiving power from the battery pack 3 of the present disclosure. The vehicle 5 may be, for example, an electric vehicle (EV), a hybrid electric vehicle (HEV), a plug-in hybrid electric vehicle (PHEV), or the like.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

1: cell stack
2: pack housing
3: battery pack
5: vehicle
10: battery cell
100: electrode assembly
110: cell body
120: electrode tab
200: cell case
200A: first case
200B: second case
210: accommodation portion
220: circumferential portion
S: sealing region
230: lead accommodation portion
300: electrode lead
G: protrusion accommodation portion
R: sealing member
400: conductive frame
410: lead connection portion
420: terminal portion
421: terminal extension portion
500: insulating frame
510: first portion
520: second portion
521: extension portion cover
F1: first fastening member
F2: second fastening member
600: tab cover member
600A: first cover member
600B: second cover member
610: body portion
620: wing portion
P: fixing protrusion

## Claims

1. A battery cell, comprising:
an electrode assembly having a cell body and an electrode tab extending from the cell body;
a cell case having an accommodation portion configured to accommodate the electrode assembly and a circumferential portion extending outward from the accommodation portion;
an electrode lead electrically coupled to the electrode tab; and
a conductive frame disposed on one surface of the circumferential portion and electrically coupled to the electrode lead through one surface of the circumferential portion.

2. The battery cell according to claim **1,**
wherein the electrode lead is located inside the cell case.

3. The battery cell according to claim 1, further comprising:
an insulating frame configured to partially cover the conductive frame.

4. The battery cell according to claim 1, further comprising:
a first fastening member configured to pass through the conductive frame, the circumferential portion and the electrode lead; and
a second fastening member provided at a side opposite to the first fastening member with the circumferential portion being interposed therebetween, the second fastening member being coupled to the first fastening member.

5. The battery cell according to claim 4,
wherein the conductive frame is configured to pressurize the circumferential portion as the first fastening member and the second fastening member are fastened.

6. The battery cell according to claim 4, further comprising:
an insulating frame configured to partially cover the conductive frame,
wherein the conductive frame and the insulating frame are configured such that the conductive frame pressurizes the insulating frame as the first fastening member and the second fastening member are fastened.

7. The battery cell according to claim 3, wherein the conductive frame includes:
a lead connection portion electrically coupled to the electrode lead; and
a terminal portion extending from the lead connection portion and disposed on the circumferential portion.

8. The battery cell according to claim 7, wherein the insulating frame includes:
a first portion configured to surround the lead connection portion; and
a second portion configured to cover a part of the terminal portion.

9. The battery cell according to claim 8,
wherein the lead connection portion is provided as a pair, and the pair of lead connection portions are connected by the terminal portion.

10. The battery cell according to claim 9,
wherein the first portion is provided as a pair, and the pair of first portions are connected by the second portion.

11. The battery cell according to claim 1, further comprising:
a sealing member interposed between an inner surface of the cell case and the electrode lead and configured to surround a circumference of a coupling region between the conductive frame and the electrode lead.

12. The battery cell according to claim 1, further comprising:
a tab cover member located inside the cell case and configured to cover a coupling region of the electrode lead and the electrode tab.

13. The battery cell according to claim 12,
wherein the tab cover member is configured so that one side is supported by the electrode lead fixed on the circumferential portion and the other side is supported by the cell body.

14. A battery pack, comprising:
a cell stack including a plurality of battery cells according to any one of claims 1 to 13; and
a pack housing configured to accommodating the cell stack.

15. A vehicle, comprising the battery pack according to claim 14.
